Europäisches Patentamt

European Patent Office

Office européen des brevets

(11) Publication number : **0 502 830 A1**

## EUROPEAN PATENT APPLICATION

(21) Application number : **92830092.0**

(22) Date of filing : **28.02.92**

(51) Int. Cl.⁵ : **B62K 5/00**

PRIORITY 040391 IT FI91000046.

(30) Priority : **04.03.91**

(43) Date of publication of application :
**09.09.92 Bulletin 92/37**

(84) Designated Contracting States :
**DE ES FR GB**

(71) Applicant : **Calzolari, Rino**
**Via di Cammori 52**
**I-50145 Firenze (IT)**

(72) Inventor : **Calzolari, Rino**
**Via di Cammori 52**
**I-50145 Firenze (IT)**

(74) Representative : **Mannucci, Gianfranco,**
**Dott.-Ing. et al**
**Ufficio Tecnico Ing. A. Mannucci Via della**
**Scala 4**
**I-50123 Firenze (IT)**

(54) **Motorcycle type vehicle with four wheels, to increase its stability and facilitate the application of a body.**

(57)    A motor vehicle having the general structure of a motorcycle or other two-wheel vehicle comprises a pair of front steering wheels (7) mounted close to each other on a fork-like member (3) and provided with a handle bar (5), and a pair of rear driving wheels (18) close to each other ; it is thus ensured the stability both at standstill and in straight moving conditions, and the inclined position is allowed as well. Each of the two front wheels is mounted on the fork-like member (3) independently of the other wheel, through a relevant quadrilateral articulation, allowing said wheel to perform displacements along its own plane, with respect to the other wheel.

*FIG.1*

EP 0 502 830 A1

Motorcycles and similar two-wheel motor vehicles (motor scooters and motor bicycles) are a ready and quick transportation means especially for city traffic. The drawback of this transportation means is the impossibility of using a body able to protect the driver from wind and rain, as it is possible, instead, with a car. A complete body cannot be used because the two wheels offer a limited stability which does not allow an increase in weight on top of the structure. Moreover, the application of side surfaces is to be excluded as they may cause unbalance conditions to the vehicle owing to the wind pressure especially when this blows laterally. A further drawback of the motorcycle is the lack of stability at standstill.

In order to at least partly overcome these problems, a four-wheel motorcycle has been provided (Italian Pat. Application 9412 A/90 of the same applicant) with two front wheels close to each other and two rear wheels close to each other. Such a construction surely provides the motorcycle with a greater stability, can be put in motion when the driver is seated theron and can be stopped on uphill and downhill roads by using the hand brake. This motor vehicle - having the general structure of a motorcycle or other two-wheel motor vehicle - comprises a pair of front steering wheels mounted close to each other on a fork-like member and provided with a handle bar, and a pair of rear driving wheels close to each other. The arrangement is such as to ensure stability both at standstill and in straight motion conditions, and to allow an inclined attitude when driving along a curve on the two side internal wheels only. The two rear coxial wheels are mounted on a member able to slightly oscillate about a substantially horizontal axis which lie in the longitudinal plane of symmetry, with elastic stresses causing the vehicle to recover its symmetrical attitude. The said wheel member may be elastically mounted on the vehicle framework in the longitudinal plane of symmetry in a manner known per se.

A body may be combined to the vehicle framework, to form a front and top protection with wide access from the two sides.

The present invention relates to an improvement, according to which each of the two front wheels is mounted - on the swinging fork-like member - independently of the other through a relevant articulation which allows said wheel to be displaced relative to the other. This ensures the adhesion, especially when driving along a curve, as both wheels remain in contact with the ground, at least within certain limits of inclination.

Practically, each front wheel is mounted on the fork-like member through a relevant articulation which allows displacements of the wheel along its own plane independently of the other wheel, with a springing elastic reaction.

Each articulation for a front wheel may be developed as an articulated quadrilateral, particularly an articulated parallelogram.

To make the fork-like member operation easier, an auxiliary system, such as a power steering, may be provided between the frame and said member.

The invention will be better understood by following the description and the attached drawing, which shows a practical, not limiting example of the same invention. In the drawing:

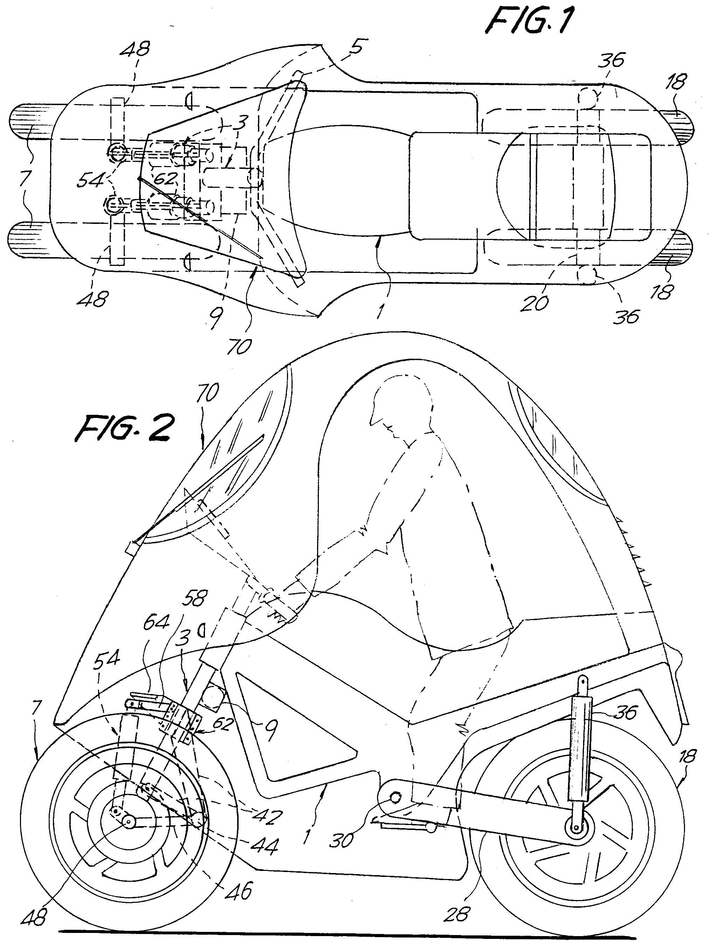

Fig. 1 shows diagrammatically a plan view of an example of vehicle according to the invention;

Fig. 2 shows a diagrammatic side view of the vehicle of Fig. 1;

Fig. 3 shows a local cross-section illustrating the assembly of the rear driving wheels;

Figs. 4 and 5 show a side and front view of the front wheels assembly; and

Fig. 6 shows a schematic front view of the position of the front wheels on a curve, with the frame being inclined.

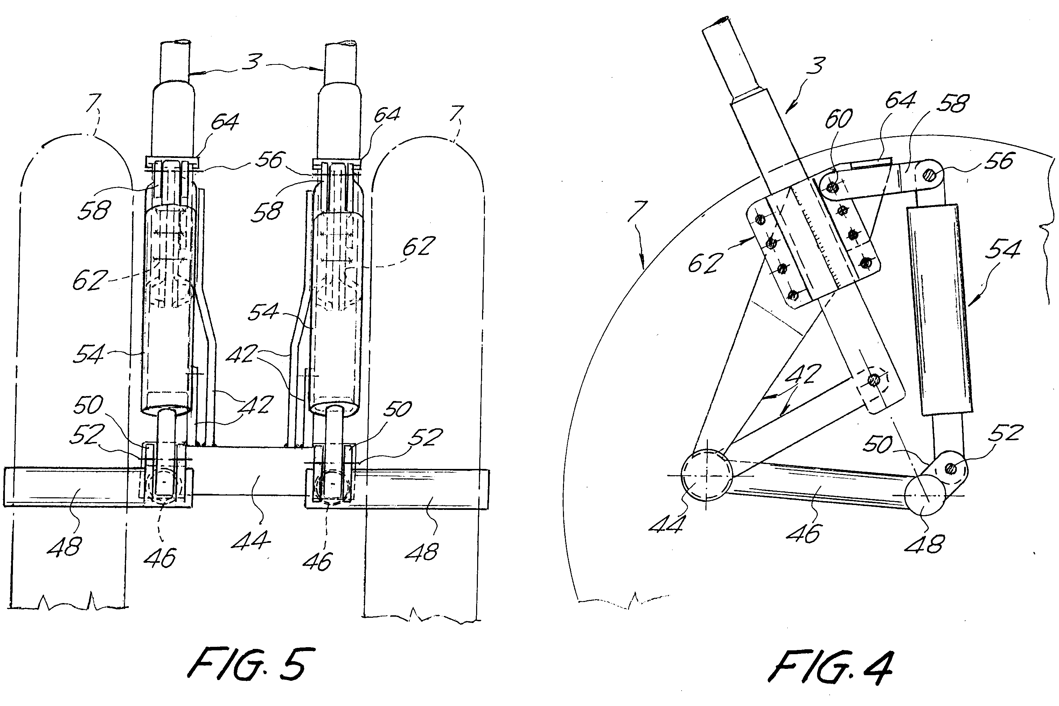

According to what is schematically shown in the attached drawing, the structure 1 of the frame of the motorcycle or equivalent vehicle may have a more or less traditional shape and allows the mounting of a front steering member 3 equivalent to a so-called fork, having a spring system of its own. This member will be associated to a handle bar 5, will be provided with an articulation axis which is slightly inclined downwards and will be able to engage a pair of front wheels 7 close to each other, rotating independently of each other, and being steered by means of said member 3. Figs. 4 to 6 show a way in which the wheels can be mounted on the spring portion which is capable of displacement along the axis of the fork rod 3. The assembly comprising the fork-like member 3 and the handle bar 5 is advantageously provided with a power steering 9 of a type known per se which - by operating between said member 3 and the frame 1 - allows an easy steering by means of the handle bar 5, in spite of the reactions acting against the movements of the fork, due to springs, for the inclination of the vehicle in curves and for other causes. The mounting of the front wheels 7 will be described later on in greater details.

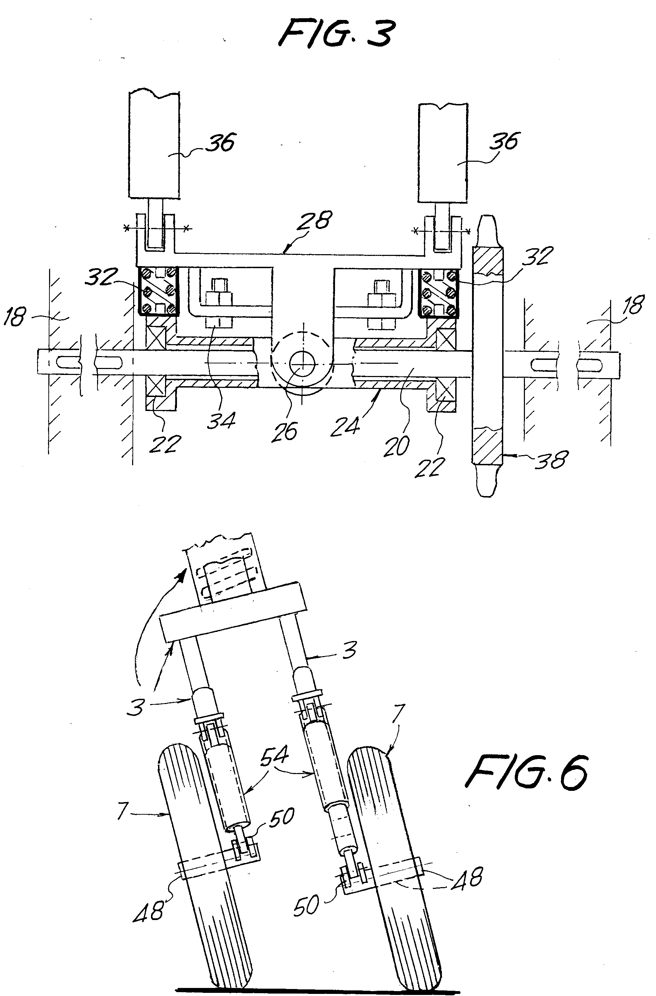

The rear wheels 18 are very close to each other and can be driven without providing a differential gear, because of the wheels closeness and for other reasons which will be set forth hereinbelow. The two wheels 18 are mounted on a transverse rotary axle 20, supported by bearings 22 of a member 24 which is pivoted about an articulation 26, whose axis is substantially longitudinal and horizontal to allow for a limited oscillation. The articulation 26 is supported by a fork-shaped member 28 which is pivoted at 30 to the structure of the frame 1. Spring means 32 react between the member 24 and the structure of the fork 28 to allow for limited inclinations in the almost vertical and transversal plane of axle 20. Suitable stop means 34 limit the angular displacement of the axle 20 about the articulation 26. The fork 28 will be made to spring by springing and damping means 36. The axle 20 will be actuated by a motor system, which can be carried by the framework 1, with a transmission whose terminal element is shown at 38 in Fig. 3.

Figs. 4 to 6 show more clearly the shape of the fork-like member 3 and the mounting thereon of the front wheels 7, which are close to each other and movable independently of each other in their plane orthogonal to the axis of rotation. The fork-like member 3 with the handle bar 5 is operated with the aid of a power steering 9, as described hereinabove.

The lower end of each of the two rods, making part of the fork-like member 3, is provided with a cantiliver portion 42 which extends rearwardly and downwardly to form an articulation 44 for an arm 46 projecting outwardly and carrying the hub 48 for the respective wheel 7. Said hub extends outwardly. To the movable hub - which can perform displacements in an almost vertical direction - a springing and damping group generally indicated with 54 is articulated at 52 through appendixes 50, which group is in turn pivoted on top at 56 to an articulated arm 58 which is engaged through an articulation 60 to a core 62 solid to the relevant rod of the fork-like member 3. The core 62, with its appendix 64, makes up a bracket with a limit stop for the angular displacement of the arm 58. The bottom of each rod of the fork-like member 3, the two articulations 44, 60, the two arms 46, 58, the two articulations 52, 56 and the damping and springing unit 54 make up an articulated quadrilateral allowing the springing of the respective wheel 7, the two wheels 7 being then able to independently springing in their plane orthogonal to the respective hub 48, and are further sprung by the fork 3 itself.

The two front wheels 7, thus independently sprung, allow the vehicle to take up an inclined position as shown in Fig. 6, but with both the wheels maintaining the contact with the ground notwithstanding the inclination of the vehicle with respect to the ground itself, at least within certain limits of inclination. This ensures a substantial adhesion of the front wheels to the ground in a curve, i.e. under inclined vehicle conditions.

To overcome the resistances offered by the spring systems, on which the springing of the front wheels 7 is based, a power steering system 9 may be provided to act between the frame and the fork-like member 3 and handle bar 5.

This structure makes it possible to keep the vehicle in vertical position resting, even when stopped, on the four wheels, with no need for a stand or a side support. A brake may be used to keep the vehicle still also on an inclined surface. All this avoids tedious operations by the user for stopping and starting the vehicle, especially in case of a motor vehicle of some power and thus of some weight. During the motion, the vehicle may be kept on the four wheels both when going straight and under a relatively limited steering conditions and at a relatively limited speed. When exceeding certain dynamic conditions, the vehicle ceases to function as four-wheel vehicle and is used again as a two-wheel vehicle, the two wheels being either the right or the left ones depending on the deviation the vehicle is subject to. Under these conditions, therefore, the manoeuvrability of the vehicle is exactly the same as that of a two-wheel vehicle.

Numeral 70 indicates a protecting structure shaped as a partial body, which leaves wide side openings both for accessing the vehicle to be ridden and for reducing the side wind thrust to a minimum, thereby increasing the stability.

The vehicle front wheels are always independent, while the rear ones are tightly connected as they are both driving wheels.

The springing for a motorcycle can be provided only on the vertical plane, but in the described solution providing a springing of the rear axle about a longitudinal axis and an independent springing of the two front wheels, the machine is less rigid in a curve since the structure can be inclined by approximately 5° with the four wheels remaining adherent to the ground: after such inclination, the motorcycle leans and rests on the two inner side wheels thus behaving like a typical two-wheel vehicle. The front wheels are able to maintain the contact with the ground also for greater inclinations.

The structure of the four-wheel motorcycle allows it to be easily driven with increased stability.

The body - not a closed body, of course, like that of the cars - will have, however, a good front extending on top and closed rearwardly on the frame structure, with no protection on the two sides. Such a partial body protects the user from the front wind and water and against the vertical rain, thereby limiting the motorcycle freedom characteristics to a small degree, but making it more protected for its daily use.

It is understood that the drawing shows an exemplification given only as a practical demonstration of the invention, as this may vary in the forms and dispositions without nevertheless coming out from the scope of the idea on which the same invention is based.

## Claims

1. A motor vehicle having the general structure of a motorcycle or other two-wheel motor vehicle, comprising a pair of front steering wheels mounted close to each other on a sprung fork-like member and provided with a handle bar, and a pair of rear driving wheels close to each other, the disposition being such as to ensure stability both at standstill and under straight motion conditions, and to allow an inclined position in a curve as well, characterized in that each of the two front wheels is mounted on the fork-like member independently of the other wheel by means of a relevant articulation, which allows said wheel to be displaced relative to the other.

2. Motor vehicle according to the preceding claim, characterized in that each front wheel is mounted on the fork-like member through a relevant articulation, which allows the wheel to be displaced in its own plane independently of the other wheel and with an elastic springing reaction.

3. Motor vehicle according to claims 1 and 2, characterized in that each articulation for a front wheel is developed as an articulated quadrilateral, preferably as an articulated parallelogram.

4. Motor vehicle according to any preceding claim, characterized in that it comprises a power steering to ease the operation of the fork-like member.

5. A motorcyle type vehicle with four wheels, to increase its stability and facilitate the application of a body; all as above described and represented for exemplification in the attached drawing.

FIG.1

FIG.2

FIG. 3

FIG. 6

FIG.4

FIG.5

European Patent
Office

**EUROPEAN SEARCH REPORT**

Application Number

EP    92 83 0092

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-466 977 (M.GERHARDT)<br>* the whole document *<br>--- | 1-3,5 | B62K5/00 |
| Y | US-A-4 650 210 (T.HIROSE)<br>* column 4, line 43 - line 51; figures 1,4 *<br>--- | 1-3,5 | |
| A | US-A-3 893 533 (H.TIDWELL)<br>* the whole document *<br>--- | 1,5 | |
| A | FR-A-2 469 342 (F.SOLBES)<br>* claim 1; figures 1-3,7 *<br>--- | 1 | |
| A | FR-A-2 315 425 (J.PECHARD)<br>* page 4, line 32 - line 35; figure 1 *<br>----- | 1,3 | |
| | | | TECHNICAL FIELDS SEARCHED (Int. Cl.5)<br><br>B62K<br>B62D |

The present search report has been drawn up for all claims

| Place of search | Date of completion of the search | Examiner |
|---|---|---|
| THE HAGUE | 24 JUNE 1992 | CZAJKOWSKI A.R. |

EPO FORM 1503 03.82 (P0401)